# EUROPÄISCHE PATENTSCHRIFT

(11) **EP 4 284 675 B1**
(45) Veröffentlichungstag und Bekanntmachung des Hinweises auf die Patenterteilung: **19.03.2025**
(21) Anmeldenummer: 22706382.3
(22) Anmeldetag: 31.01.2022
(51) Int. Cl.: B60M 1/28, B60M 1/20

(54) **VORRICHTUNG UND VERFAHREN ZUM HALTEN EINES LÄNGSKETTENWERKES**
DEVICE AND METHOD FOR HOLDING A LONGITUDINAL CATENARY SYSTEM
DISPOSITIF ET PROCÉDÉ DE RETENUE D'UNE CATÉNAIRE

(30) Priorität: 31.01.2021 DE 102021102176
(43) Veröffentlichungstag der Anmeldung: 06.12.2023
(73) Patentinhaber: Furrer + Frey AG, 3000 Bern 6 (CH)
(72) Erfinder: FURRER, Beat, 3012 Bern (CH)
(74) Vertreter: von Bülow & Tamada
(86) Internationale Anmeldenummer: PCT/IB2022/050824
(87) Internationale Veröffentlichungsnummer: WO 2022/162636

(56) Entgegenhaltungen:
- EP-A1- 0 624 500
- EP-A1- 3 456 601
- FR-A1- 3 081 792
- FR-A1- 3 089 165

## Beschreibung

Die vorliegende Erfindung betrifft eine Vorrichtung und ein Verfahren zum Halten eines Längskettenwerkes.

Aus der EP 2 910 409 A1 ist bekannt, dass Fahrdrähte in Form von Oberleitungen zur elektrischen Energieversorgung, die an Längskettenwerken gehalten sind, exakt positioniert sein müssen.

Aus der FR 3 089 165 A1 ist ein Verfahren zur Wartung von Oberleitungen auf Eisenbahnschienen durch einen Arbeitszug mit Lokomotive und Wartungswagen bekannt. Der Wartungswagen verfügt über Hubvorrichtungen und Stützsysteme für die Oberleitung. Zwei Kräne im Zug manipulieren und versetzen die Tragwerke entlang der Schiene, um neue Tragwerke zu installieren.

Aus der EP 3 456 601 ist ein System zur Handhabung von länglichen Bauelementen mit einer Basis, Handhabungseinrichtungen und Bewegungsmitteln bekannt. Die Bewegungsmittel umfassen einen teleskopierbaren Arm und Montagemittel, die den Arm schwenkbar an der Basis befestigen. Diese Montagemittel sind gleitend an der Basis montiert, und es gibt Fernsteuerungsmittel für den Arm. Die Handhabungseinrichtungen umfassen einen Kranarm mit Greifmitteln, der über eine Verbindung mit dem Arm verbunden ist und so eine Drehung um vertikale und horizontale Achsen ermöglicht.

Aufgabe der Erfindung ist es, die Positionierung von Längskettenwerken zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung, umfasst eine Vorrichtung zum Halten eines sich in einer Fahrtrichtung erstreckenden Längskettenwerkes mit einem Tragseil und einem daran gehaltenen Fahrdraht in einer Höhenrichtung, folgende Merkmale:
- ein auf einem Schienenfahrzeug platzierbares Gestell,
- einen am Gestell gehaltenen und in einer Querrichtung quer zur Fahrtrichtung und quer zur Höhenrichtung ausrichtbaren Ausleger, und
- einen in der Querrichtung am Ausleger gehaltenen Stützarm mit einem am Ausleger gehaltenen ersten Stützarmelement und einem gegenüber dem ersten Stützarmelement in der Höhenrichtung beweglich gehaltenen zweiten Stützarmelement, wobei am zweiten Stützarmelement ein Auflageelement gehalten ist, auf welches das Längskettenwerk entgegen der Höhenrichtung auflegbar ist.

Der angegebenen Vorrichtung liegt ausgehend von der eingangs genannten Notwendigkeit, den Fahrdraht exakt über einer Schiene zu platzieren die Überlegung zugrunde, dass bei der Wartung einer Oberleitung der Fahrdraht entweder abgebaut oder ausreichend gesichert werden muss, wenn die den Fahrdraht tragenden Elemente während der Wartung keine ausreichende Halterung für den Fahrdraht mehr bieten. Dies macht beispielsweise den Austausch eines Querfeldes durch einen Querträger sehr zeitaufwändig. In der Regel lassen sich diese Arbeiten nur über mehrere Tage an einem Stück durchführen.

Die angegebene Vorrichtung allerdings verwendet die Schiene als Referenz für die Lage des Fahrdrahtes, positioniert den Fahrdraht exakt an einer vorgegebenen Stelle und hält diesen dann dort während der gesamten Wartungsarbeiten. Das Gestell der angegebenen Vorrichtung lässt sich auf einem gewöhnlichen Schienenfahrzeug anordnen, so dass der Ausleger mit dem daran gehaltenen Stützarm in der Längsrichtung grob unter halb des Fahrdrahtes positioniert werden kann. Über den Ausleger und den Stützarm lässt sich der Fahrdraht dann in der Querrichtung und der Höhenrichtung sehr exakt positionieren. Auf eine exakte Positionierung in der Längsrichtung kommt es nicht an, weil davon ausgegangen werden kann, dass der Fahrdraht immer über der Schiene verläuft. Auf diese Weise lässt sich der Fahrdraht für die Wartung ausreichend in seiner Position oder Lage sichern und die Wartung ohne größere zeitliche Verluste durchführen. Die Zeit für den Austausch eines Querfeldes durch einen Querträger lässt sich so von mehr als zwei Tagen auf eine einzige Nacht verkürzen.

In einer Weiterbildung der angegebenen Vorrichtung besitzt das Auflageelement einen sich parallel zum Stützarm erstreckenden Auflagekörper, von dem sich in die Höhenrichtung beabstandet zueinander Querrichtungsbegrenzungselemente erstrecken. Zwar kann der Fahrdraht in der Querrichtung gesehen ungeführt gehalten werden, weil mit dem Auflageelement vor allem Kräfte entgegen der Höhenrichtung aufgenommen werden sollen, allerdings können durch die mit den Querrichtungsbegrenzungselementen einhergehende gabelartige Ausbildung des Auflagekörpers Störkräfte aufgenommen werden.

In einer zusätzlichen Weiterbildung der angegebenen Vorrichtung sind die Begrenzungselemente in der Höhenrichtung unterschiedlich lang ausgeführt. Auf diese Weise kann der Auflagekörper den Fahrdraht bei einer Grobpositionierung in der Querrichtung zunächst fangen und in die durch die gabelartige Ausbildung des Auflagekörpers entstandene Aussparung entgegen der Höhenrichtung einführen.

In einer besonderen Weiterbildung der angegebenen Vorrichtung ist das erste und/oder das zweite Stützarmelement aus Hohlprofilstäben gefertigt, wodurch sich die Vorrichtung besonders kostengünstig und leichtgewichtig, aber dennoch stabil ausführen lässt.

In einer weiteren Weiterbildung der angegebenen Vorrichtung umfasst das erste Stützarmelement einen Hohlprofilstab in den das zweite Stützarmelement eingeschoben ist. Auf diese Weise lässt sich der Stützarm wie eine Teleskopstange ausfahren, so dass sich der Auflagekörper in der Höhenrichtung trotz ortsfester Anordnung des Stützarmes auf dem Ausleger positionieren lässt.

In einer anderen Weiterbildung umfasst die angegebene Vorrichtung einen parallel zum Stützarm am Ausleger gehaltenen Zugarm zum Ziehen des zweiten Stützarmelementes in der Höhenrichtung. Grundsätzlich ließe sich das erste Stützarmelement als Hubvorrichtung ausführen, wobei das zweite, bewegliche Stützarmelement in der Höhenrichtung über die Hubvorrichtung angehoben wird. Allerdings werden die Kräfte zum Anheben des Längskettenwerkes beim Ziehen sowohl auf den Stützarm als auch auf den Zugarm verteilt, wodurch sich die Positionierung des Fahrdrahtes kontrollierter und sicherer durchführen lässt.

In einer bevorzugten Weiterbildung der angegebene Vorrichtung sind der Zugarm mit den Stützarmelementen gemeinsam auf einem Sockel gehalten, so dass sich die Lage der beiden Arme in Richtung des Auslegers zueinander fest definieren lässt.

In einer noch anderen Weiterbildung der angegebenen Vorrichtung ist der Zugarm als Teleskopstange ausgeführt. Auf diese Weise lässt sich zunächst die Lage des Zugpunktes zum Ziehen des zweiten Stützarmelementes festlegen, wodurch sich eine Grobpositionierung des Wirkbereichs der Vorrichtung definieren lässt. Durch das Ziehen des zweiten Stützarmelementes über den Zugarm lässt dann eine Feinpositionierung herbeiführen.

In einer besonders bevorzugten Weiterbildung umfasst die angegebene Vorrichtung eine Seilwinde zum Ziehen eines mit dem zweiten Stützarmelement verbundenen und über den Zugarm geführten Seiles, mit dem sich die Feinpositionierung in besonders effektiver Weise durchführen lässt.

Gemäß einem weiteren Aspekt der Erfindung umfasst ein Verfahren zum Sichern einer Position eines sich in einer Fahrtrichtung erstreckenden Längskettenwerkes mit einem Tragseil und einem daran Fahrdraht in einer Höhenrichtung, die Schritte:
- Anordnen eines Gestells auf einer in der Höhenrichtung und der Querrichtung gesehen unterhalb des Fahrdrahtes verlaufenden Schiene,
- Befestigen eines Auslegers quer zur Fahrtrichtung und quer zur Höhenrichtung am Gesell, und
- Anheben des Fahrdrahtes mit einem auf dem Ausleger quer zur Querrichtung und quer zur Längsrichtung gehaltenen Stützarmes in die zu sichernde Position.

Die oben beschriebenen Eigenschaften, Merkmale und Vorteile dieser Erfindung sowie die Art und Weise wie diese erreicht werden, werden verständlicher im Zusammenhang mit der folgenden Beschreibung der Ausführungsbeispiele, die im Zusammenhang mit der Zeichnung näher erläutert werden. Es zeigen:
Fig. 1 eine schematische Ansicht einer Vorrichtung zum Halten eines Längskettenwerkes in einem ersten Funktionszustand,
Fig. 2 eine schematische Ansicht der Vorrichtung aus Fig. 1 in einem zweiten Funktionszustand,
Fig. 3 eine schematische Ansicht eines Drehlagers in der Vorrichtung aus Fig. 1,
Fig. 4 eine schematische Ansicht einer Abstützung in der Vorrichtung aus Fig. 1,
Fig. 5 eine schematische Ansicht eines Auslegerarmelementes in der Vorrichtung aus Fig. 1,
Fig. 6 eine schematische Ansicht eines Stützarmes in der Vorrichtung aus Fig. 1,
Fig. 7 eine schematische Ansicht eines Zustandes eines Verfahrens zum Austausch eines Querfeldes durch einen Querträger in einem ersten Schritt,
Fig. 8 eine schematische Ansicht eines Zustandes des Verfahrens in einem zweiten Schritt,
Fig. 9 eine schematische Ansicht eines Zustandes des Verfahrens in einem dritten Schritt,
Fig. 10 eine schematische Ansicht eines Zustandes des Verfahrens in einem vierten Schritt,
Fig. 11 eine schematische Ansicht eines Zustandes des Verfahrens in einem fünften Schritt,
Fig. 12 eine schematische Ansicht eines Zustandes des Verfahrens in einem sechsten Schritt,
Fig. 13 eine schematische Ansicht eines Zustandes des Verfahrens in einem siebten Schritt,
Fig. 14 eine schematische Ansicht eines Zustandes des Verfahrens in einem achten Schritt,
Fig. 15 eine schematische Ansicht eines Zustandes des Verfahrens in einem neunten Schritt,
Fig. 16 eine schematische Ansicht eines Zustandes des Verfahrens in einem zehnten Schritt, und
Fig. 17 eine schematische Ansicht eines Zustandes des Verfahrens in einem elften Schritt.

In den Figuren werden gleiche technische Elemente mit gleichen Bezugszeichen versehen und nur einmal beschrieben. Die Figuren sind rein schematisch und geben vor allem nicht die tatsächlichen geometrischen Verhältnisse wieder.

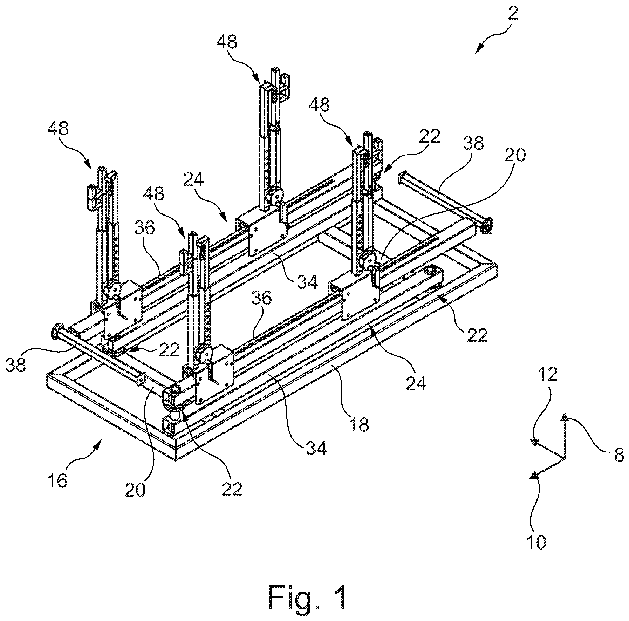

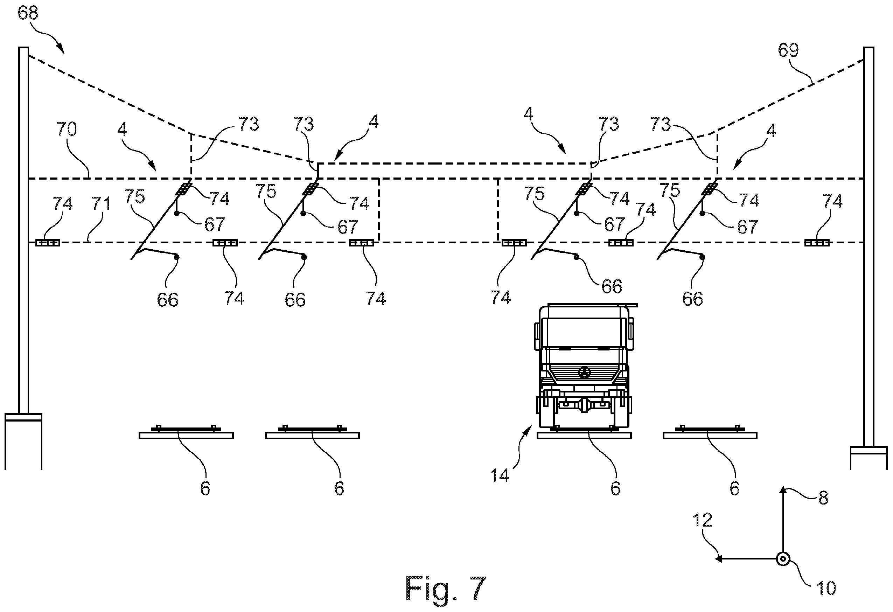

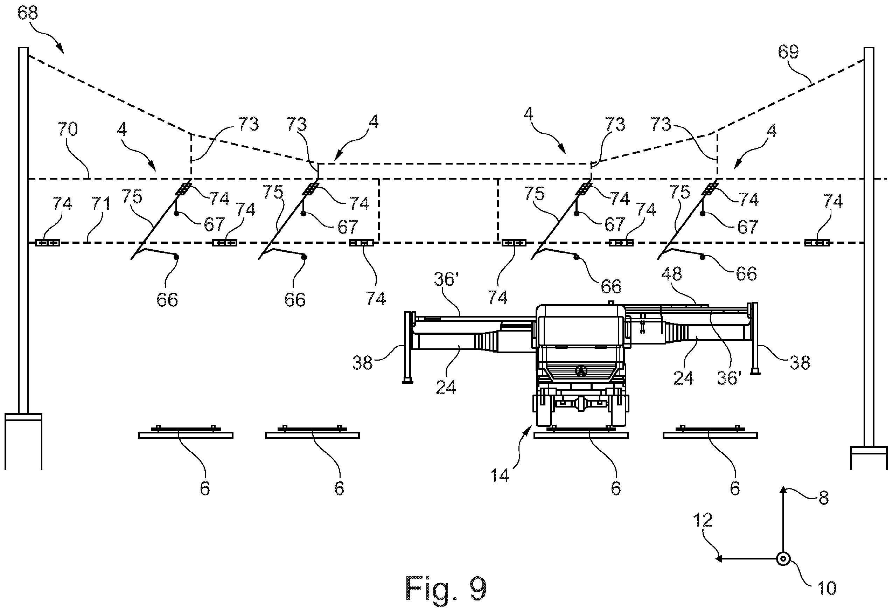

Es wird auf Fig. 1 Bezug genommen, die eine schematische Ansicht einer Vorrichtung 2 zum Halten mehrerer in den Fig. 7 bis 17 gezeigter Längskettenwerke 4 in einem ersten Funktionszustand zeigt.

Die Längskettenwerke 4 sind über je in einer Höhenrichtung 8 gesehen über einer Schiene 6 angeordnet, die sich alle entlang einer Fahrtrichtung 10 erstrecken. Die Schienen 6 als auch die einzelnen Längskettenwerke 4 sind ein einer Querrichtung 12 quer zur Höhenrichtung 8 und quer zur Längsrichtung 10 voneinander beabstandet. Die Vorrichtung 2 lässt sich auf ein Schienenfahrzeug 14 aufsetzen, welches auf einer der Schienen 4 in der Längsrichtung 10 vor-oder zurückbewegbar ist.

Die Vorrichtung 2 umfasst ein Gestell 16, welches in einer durch die Längsrichtung 10 und die Querrichtung 12 aufgespannten Ebene liegt und aus einem Rahmen 18 gefertigt ist, der mit zwei Stützstreben 20 verstärkt ist. Der Rahmen 20 kann grundsätzlich beliebig gefertigt sein, so beispielsweise aus vier zusammengesetzten Vierkantprofilen. Das Gestell 16 ist bezüglich seines nicht weiter gezeigten und referenzierten Schwerpunktes punktsymmetrisch ausgebildet.

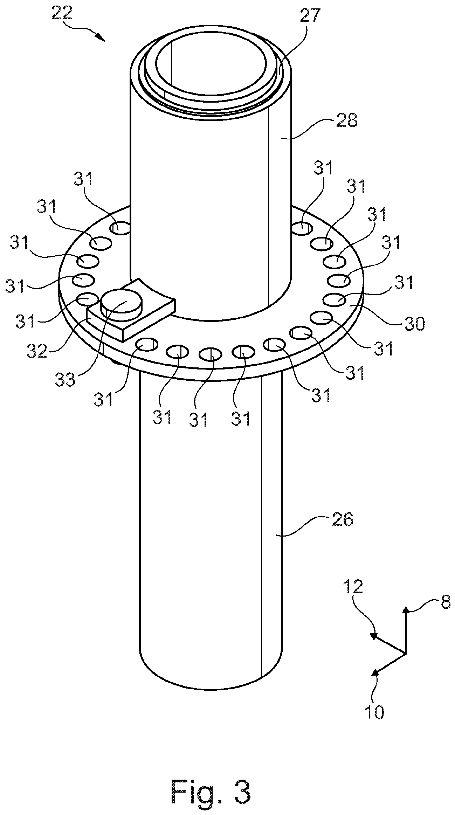

Auf jeder Stützstrebe 20 ist ein in Fig. 3 gezeigtes Drehlager 22 für je einen Ausleger 24 getragen. Die beiden Drehlager 22 sind bezüglich des Schwerpunktes des Gestells 16 zueinander punktsymmetrisch angeordnet. Jedes Drehlager 22 umfasst einen ortsfest am Gestell 16 befestigen Zapfen 26 auf den konzentrisch Hülse 28 geschoben ist. Die Hülse 28 ist gegenüber dem Zapfen 26 über einer Reibminderung 27, wie ein Fett oder Wälzelemente verdrehbar gelagert, wobei der Ausleger 24 ortsfest an der Hülse 28 gehalten ist. Ortsfest am Zapfen 26 ist eine kreisrunde Lochscheibe 30 gehalten, durch die an der radialer Außenseite in umfänglich gleichen Abständen nicht Durchgangsöffnungen 31 geführt sind. Ortsfest an der Hülse ist ein Arm 32 mit einer nicht weiter zu sehenden Durchgangsöffnung gehalten, die konzentrisch in der Höhenrichtung 8 gesehen über eine der Durchgangsöffnung 31 durch die Lochscheibe 30 platzierbar ist. Mit einem durch die Durchgangsöffnung am Arm 32 und die Durchgangsöffnung 31 an der Lochscheibe 30 geschobenen Stift 33, lässt sich die Postion des Auslegers 24 relativ zum Gestell 16 fixieren. Der Mechanismus zum Fixieren der relativen Drehlage des Auslegers 24 zum Gestell 16 mittels Lochscheibe 30, Arm 32 und Stift 33 ist besonders kostengünstig, stabil und lagesicher herzustellen. Grundsätzlich lässt sich dieser Mechanismus zur Lagesicherung allerdings in beliebiger Weise realisieren, sollte er applikationsabhängig überhaupt notwendig sein.

Jeder Ausleger 24 ist als Knickarm aus einem ersten Auslegerarmelement 34 und einem zweiten Auslegerarmelement 36 gebildet. Die beiden Auslegerarmelemente 34, 36 sind miteinander über je ein Drehlager 22 verbunden, das bereits anhand Fig. 3 beschrieben wurde. An den beiden Enden des ersten Auslegerarmelementes 34 befindet sich so je ein Drehlager 22, eines zur Anbindung an das Gestell 16 und eines zur Anbindung an das zweite Auslegerarmelement 36.

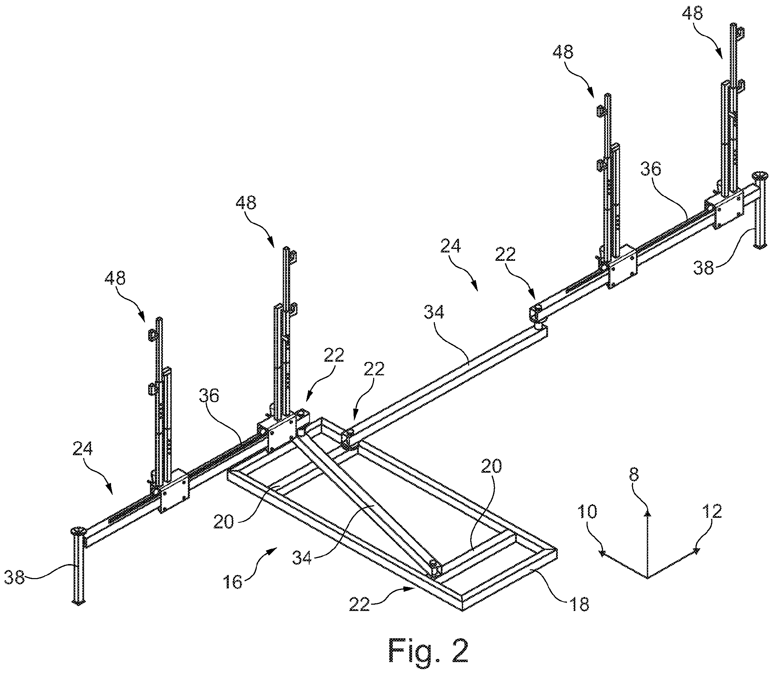

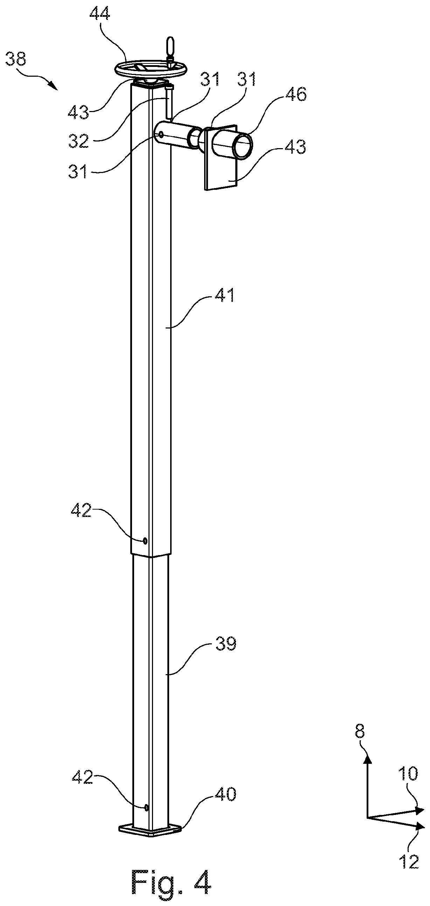

An jedem zweiten Auslegerarmelement 36 ist an der dem ersten Auslegerarmelement 34 gegenüberliegenden Seite eine in Fig. 4 gezeigte Abstützung 38 gehalten, wie sie grundsätzlich aus herkömmlichen Fahrzeugkränen zur Stabilisierung bekannt ist. Die Abstützung 38 in Fig. 4 ist in der Lage dargestellt, wie sie in Fig. 2 in der unteren linken Ecke zu sehen ist. Sie besitzt einen Fuß 39 an dessen einem Ende eine auf einem Boden auflegbare Abstellplatte 40 befestigt ist. Über das in der Höhenrichtung 8 gesehene der Abstellplatte 40 gegenüberliegende Ende des Fußes 39 ist ein Profilstab 41 gestülpt, so dass sich die Abstützung 38 in der Höhenrichtung 8 teleskopartig ausziehen und zusammenschieben lässt. An der in der Höhenrichtung 8 gesehenen Unterseite besitzen sowohl der Fuß 39 als auch der Profilstab 41 eine in der Längsrichtung 10 verlaufende Bohrung 42 durch die Mantelseite, durch die sich ein nicht weiter gezeigter Sicherungsstift führen lässt, um die Abstützung 38 in einem zusammengeschobenen Zustand zu sichern. Auf die Stirnseite des Profilstabes 41, die in der Höhenrichtung 8 gesehenen dem Fuß 39 gegenüberliegt ist eine Abschlussplatte 43 aufgesetzt an deren in der Höhenrichtung 8 gesehenen Oberseite axial und radial fest, aber in Tangentialrichtung drehbar ein Hahnrad 44 gelagert ist. An das Hahnrad 44 schließt sich entgegen der Höhenrichtung 8 verlaufend in Fig. 4 nicht zu sehen eine Gewindestange an, die in eine in der Höhenrichtung 8 gesehene oberseitige Stirnseite des Fußes 39 eingeschraubt ist. Durch Drehen des Hahnrades 44 kann der Profilstab 41 so axial gegenüber dem Fuß 3 verschoben und so die Abstützung ausgezogen oder zusammengeschoben werden. In der Höhenrichtung 8 gesehen ist am oberen Ende des Profilstabes 41 unterhalb der Abschlussplatte 43 ein Stutzen 45 befestigt. Auf den Stutzen 45 ist ein Rohrstück 46 aufsetzbar. Das Rohrstück 46 ist in einer weiteren Abschlussplatte 43 festlagernd gehalten, die jedoch auf das Ende eines der zweiten Auslegerarmelemente 36 festlagernd aufsetzbar ist, welches dem Drehlager 22 gegenüberliegt. Mantelseitig durch das Rohrstück 46 ist eine Durchgangsöffnung 31 geführt. Ferner sind mantelseitig durch den Stutzen 45 zwei voneinander 90° beabstandete Durchgangsöffnungen 31 geführt. Durch Drehen des Rohrstücks 46 kann dessen Durchgangsöffnung 31 über eine der beiden Durchgangsöffnungen 31 durch den Stützen gelegt und ein Stift 32 durch die beiden Durchgangsöffnungen 31 geführt werden. Auf diese Weise die Abstützung entweder in der in Fig. 1 gezeigten Lage oder in der Fig. 2 gezeigten Lage zum Gestell 16 fixierbar.

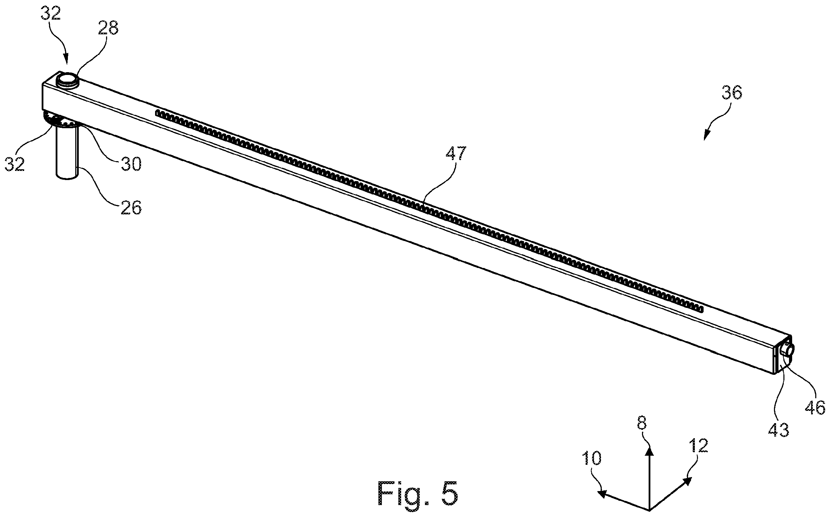

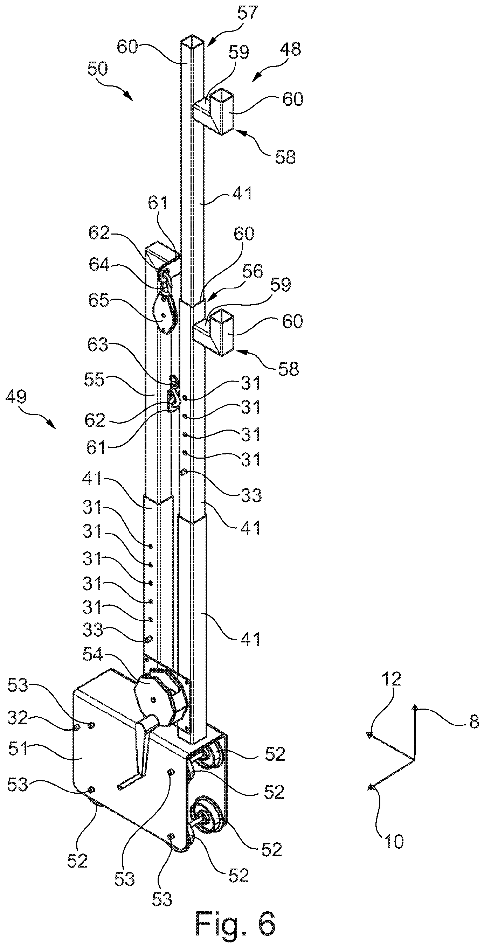

Zum Platzieren der Ausleger 24 werden die ersten Auslegerarmelemente 34 um das Drehlager 22 am Gestell 16 solange gedreht, bis das dem Gestell 16 gegenüberliegende Ende des entsprechenden ersten Auslegerarms 34 grob neben einem Längskettenwerk 4 liegt, welches mit der Vorrichtung 2 gehalten werden soll. Anschließend wird das zweite Auslegerarmelement 36 des entsprechenden Auslegers 24 um das Drehlager 22 am ersten Auslegerarmelement 34 gedreht, welches vom Gestell 16 entfernt liegt. Die Drehung erfolgt solange, bis das zweite Auslegerarmelement 36 genau unter dem entsprechenden Längskettenwerk 4 liegt, welches mit der Vorrichtung 2 gehalten werden soll. Nun wird auf einer in Fig. 5 zu sehenden Zahnstange 47 ein in Fig. 6 zu sehender Stützarm 48 entlang des zweiten Auslegerarmelementes 46 verfahren und unterhalb des zu haltenden Längskettenwerkes 4 platziert. Die Vorrichtung 2 der vorliegenden Ausführung besitzt vier Stützarme 48, so dass sich mit der Vorrichtung 2 gleichzeitig vier Längskettenwerke 4 halten lassen.

Der Stützarm 48 besitzt ein in der Höhenrichtung 8 gesehen ortsfest zum zweiten Auslegerelement 36 angeordnetes erstes Stützarmelement 49 und ein in der Höhenrichtung 8 gesehen am ersten Stützarmelement 49 verschieblich gehaltenes zweites Stützarmelement 50.

Das erste Stützarmelement 49 besitzt einen Sockel 51, der das zweite Auslegerarmelement 36 in der Höhenrichtung 8 gesehen nach unten hin umgreift. An den in der Längsrichtung 10 gesehenen Innenseiten des Sockels 51 sind acht Räder 52 auf vier Radachsen 53 drehbar gehalten, über die sich der Stützarm 48 auf dem zweiten Auslegerarmelement 36 verfahren lässt. Jede Radachse 53 trägt zwei Räder. Dabei tragen vier der Räder 52 den Stützarm 48 auf dem zweiten Auslegerarmelement 36, während in der Höhenrichtung 8 gesehen weitere vier der Räder 52 den Stützarm 48 gegen ein umkippen sichern. Die Räder 52 können mit in Fig. 6 nicht weiter mit Bezugszeichen versehenen Spurkränzen versehen sein, um eine Führung des Stützarmes 48 durch das zweite Auslegerarmelement 36 zu ermöglichen. Über einen Stift 32, der durch den Sockel 51 und die Zahnstange 47 geschoben wird, lässt sich eine Lage des Stützarmes 48 auf dem zweiten Auslegerarmelement 36 sichern. Vom Sockel 51 aus erstrecken sich in der Höhenrichtung 8 zwei parallel angeordnete Profilstäbe 41 auf dem ersten Stützarmelement 49. An diesen beiden Profilstäben 41 ist eine Seilwinde 54 gehalten, auf deren Funktion später näher eingegangen wird.

In die dem Sockel 51 abgewandten Stirnseiten der beiden Profilstäbe 41 des ersten Stützarmelementes 49 ist das zweite Stützarmelement 50 teleskopartig eingeschoben. Das zweite Stützarmelement 49 umfasst einen Zugarm 55, eine erste Haltegabel 56 und eine zweite Haltegabel 57. Die beiden Haltegabeln 56, 57 sind funktionell gleich aufgebaut. Die erste Haltegabel 56 besitzt einen Profilstab 41, der entgegen der Höhenrichtung 8 in einen der Profilstäbe 41 auf dem Sockel 51 eingeschoben ist. Analog dazu besitzt auch die zweite Haltegabel 57 einen Profilstab 41, der entgegen der Höhenrichtung 8 in den Profilstab 41 der ersten Haltegabel 56 eingeschoben ist. Auf diese Weise lassen sich die beiden Haltegabeln 56, 57 in der Höhenrichtung 8 teleskopartig ausziehen und zusammenschieben. Dabei sind durch den Profilstab 41 der ersten Haltegabel 56 mantelseitige Durchgangsöffnungen 31 geführt, durch die je ein Stift 33 schiebbar ist. Der Stift 33 blockiert im Profilstab 41 der ersten Haltegabel 56 einen Eintauchweg des Profilstabes 41 der zweiten Haltegabel 57 entgegen der Höhenrichtung 8 und hält die zweite Haltegabel 57 so in der Höhenrichtung 8 gesehen in einer bestimmten Höhe.

Von den Profilstäben 41 jeder Haltegabel 56, 57 ragt in Fig. 6 entgegen der Querrichtung 12 ein Halteteil 58 ab. Jedes Halteteil 58 umfasst eine sich entgegen der Querrichtung 12 erstreckenden Auflagekörper 59, der in der Höhenrichtung 8 gesehen an der Oberseite jeder Haltegabel 56, 57 mit einem Abstand zur Stirnseite des jeweiligen Profilstabes 41 befestigt ist. Gegenüberliegend zum Profilstab 41 erstreckt sich vom Auflagekörper 59 in der Höhenrichtung 8 ein Zapfen, so dass jede Haltegabel 56, 57 an der in der Höhenrichtung 8 gesehenen Oberseite U-förmig ausgebildet ist. Sowohl der Zapfen als auch der Teil des Profilstabes 41 jeder Haltegabel 56, 57, der in der Höhenrichtung 8 oberhalb des Auflagekörpers 59 liegt, begrenzt eine Bewegung eines auf dem Auflagekörper 59 auflegbaren Gegenstandes, so dass diese beiden Elemente als Querrichtungsbegrenzungselemente 60 wirken. An der zweiten Haltegabel 57 ist das Querrichtungsbegrenzungselement 60, welches durch den Profilstab 41 gebildet ist, in der Höhenrichtung 8 gesehen länger ausgeführt, als in der Querrichtung 12 gesehene gegenüberliegende Querrichtungsbegrenzungselement 60.

Zurück zum Sockel 51 blickend ist in den anderen der beiden Profilstäbe 41 des ersten Stützarmelementes 49 der Zugarm 55 entgegen der Höhenrichtung 8 eingeschoben. Zur Einstellung einer Höhenlage des Zugarmes 55 über dem Sockel 51 sind durch den zweiten Profilstab 41 analog zum Profilstab 41 der ersten Haltegabel 56 mehrere Durchgangsöffnungen 31 geführt in die ein Stift 33 einschiebbar ist. Wie schon in der ersten Haltegabel 56 begrenzt der Stift 33 im zweiten Profilstab 41 des ersten Stützarmelementes 49 einen Eintauchweg des Zugarmes 55.

Das nicht in den zweiten Profilstab 41 des ersten Stützarmelementes 49 eingeschobene Ende des Zugarmes 55 ist entgegen der Querrichtung 12 abgewinkelt und mit einer Halteplatte 61 abgeschlossen. Die Halteplatte 61 erstreckt sich in der Längsrichtung 10 gesehen am vorderen und hinteren Ende über den Zugarm 55 hinaus und besitzt in diesen Bereichen Einhängeelemente 62 hier in Form von Durchgangsöffnungen. Von den Einhängeelementen 62 ist in der Perspektive der Fig. 6 nur das in der Längsrichtung 10 gesehene vordere Einhängeelement 62 zu sehen. Analog hierzu ist am Profilstab 41 der ersten Haltegabel 56 eine weitere Halteplatte 61 in der Höhenrichtung 8 gesehen mittig gehalten. Über diese beiden soeben erläuterten Halteplatten 61 lässt sich die erste Haltegabel 56 aus dem Profilstab 41 des ersten Stützarmelementes 49 herausziehen, in den sie eingeschoben ist.

Hierzu werden zunächst in das Einhängeelement 62 an der ersten Haltegabel 56 ein Haltehaken 63 und in das Einhängeelement 62 am Zugarm 55 ein Haken 64 eingehängt, an dem eine Umlenkrolle 65 gehalten ist. Am Haltehaken 63 wird nun ein Ende eines in Fig. 6 nicht zu sehendes Zugseil angebunden. Das andere Ende des Zugseiles wird über die Umlenkrolle 65 geführt und in der Seilwinde 54 aufgerollt. Nun kann durch stetiges Aufrollen des Zugseiles in der Seilwinde 54 die Haltegabel 56 in der Höhenrichtung 8 angehoben und positioniert werden. Die Seilwinde 54 besitzt eine geeignete Rückhaltevorrichtung, um das aufgerollte Zugseil und damit die erste Haltegabel 56 in der eingestellten Position in der Höhenrichtung 8 zu halten. Rückhaltevorrichtungen für Seilwinden sind dem Fachmann beispielsweise aus der WO2013101512A1 bekannt und bedürfen keiner weiteren technischen Erläuterung.

Im Betrieb der Vorrichtung 2 wird das die Vorrichtung 2 tragende Schienenfahrzeug 14 zunächst in der Längsrichtung 10 gesehen an der Position platziert, an der das zu tragenden Längskettenwerk 4 gehalten werden soll.

Anschließend werden die als Knickarme ausgeführten Ausleger 24 ausgefahren. Hierzu wird von jedem Ausleger 24 der zweite Auslegerarmelement 36 einerseits parallel zur Querrichtung 12 angeordnet, so dass sich die auf dem Ausleger getragenen Stützarme 48 in der Querrichtung 12 verschieben lassen. Andererseits werden die zweiten Auslegerarmelemente 36 der Ausleger 24 grob unterhalb der zu tragenden Längskettenwerke 4 positioniert. Die Lage der ersten Auslegerarmelemente 34 der Ausleger 24 ist somit nicht beliebig sondern bestimmt sich durch die Ziellage der zweiten Auslegerarmelemente 36 der Ausleger 24. Zur Sicherung der Stellung der Ausleger werden in den einzelnen Drehlagern 22 die Stifte 33 in die Durchgangsöffnungen 31 eingesetzt, so dass sich die Auslegerarmelemente 34, 36 nicht mehr bewegen können.

Abschließend werden die Zugarme 48 auf den zweiten Auslegerarmelementen 36 in der Querrichtung 12 so positioniert, dass die gabelförmigen Enden der Haltegabeln 56, 57 vor den jeweils zu tragende Längskettenwerken 4 liegen. Nun werden die Haltegabeln 56, 57 in der Höhenrichtung 8 gesehen relativ zueinander so positioniert, dass ein Abstand der Auflagekörper 59 in der Höhenrichtung 8 einem Abstand eines in Fig. 7 gezeigten Fahrdrahtes 66 von einem Tragseil 67 in dem Längskettenwerk 4 besitzen, welches getragen werden soll. Diese relative Höhenlage der beiden Haltegabeln 56, 57 zueinander wird durch Einschieben des Stiftes 33 in eine der Durchgangsöffnungen 31 im Profilstab 41 der ersten Haltegabel 56 gesichert.

Nun werden die Auflagekörper 59 der beiden Haltegabeln 56, 57 in der Querrichtung 12 gesehen auf die gleiche Position geschoben, wie das zu tragende Längskettenwerk, so dass sich der Auflagekörper 59 an der ersten Haltegabel 56 in der Höhenrichtung 8 gesehen unterhalb des Fahrdrahtes 66 und der Auflagekörper 59 an der zweiten Haltegabel 57 in der Höhenrichtung 8 gesehen zwischen dem Fahrdraht 66 und dem Tragseil 67 befindet.

Abschließend werden das in Fig. 6 nicht zu sehende Zugseil durch Drehen der Seilwinde 54 angezogen und die beiden Haltegabeln 56, 57 in der Höhenrichtung 8 nach oben gezogen um das Längskettenwerk 4 anzuheben.

Die Vorrichtung 2 ist ein Beispiel für ein Werkzeug, mit dem sich ein Querkettenwerk auf einer Strecke für Schienenfahrzeuge in einfacher Weise durch einen Querbalken austauschen lässt.

Ein solches Austauschverfahren wird nachstehend anhand der Fig. 7 bis 17 beschrieben.

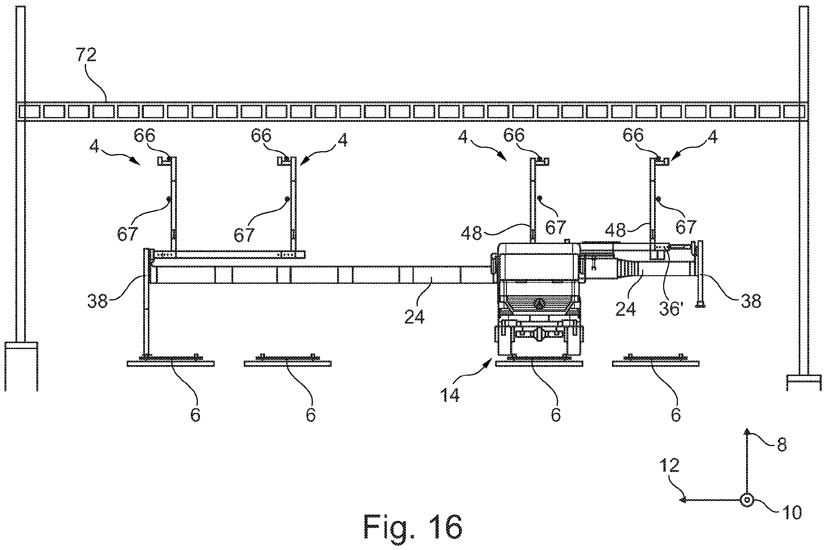

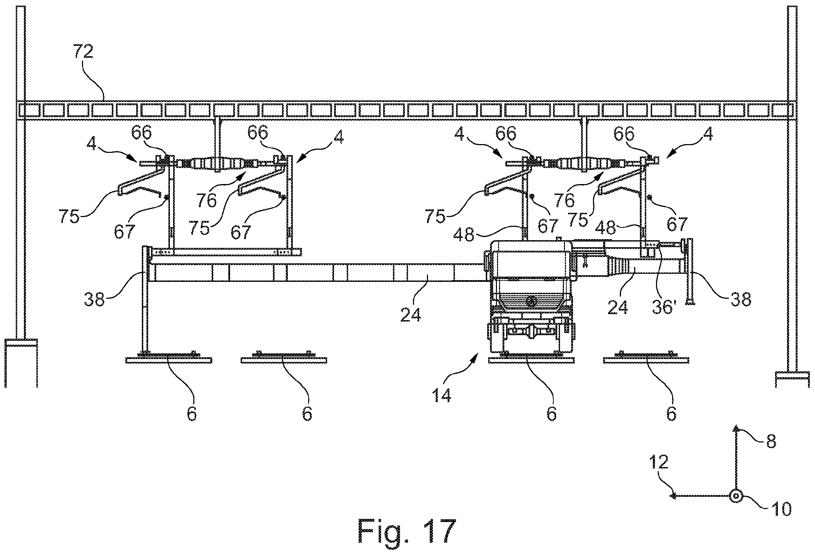

Mit dem nachstehend beschriebenen Verfahren soll ein Querkettenwerk 68 aus einem Quertragseil 69, einem oberen Richtseil 70, einem unteren Richtseil 71, Quertragseilhängern 73 und Isolatoren 74 gegen einen in Fig. 16 und 17 zu sehenden Querbalken 72 ausgetauscht werden. Querkettenwerke sind dem Fachmann beispielsweise aus der EP 2 805 846 A1 bekannt, weshalb auf eine nähere Erläuterung der Technik der Kürze halber verzichtet werden soll.

Das Querkettenwerk 68 trägt über jeder Schiene 6 je ein Tragseil 67, an dem in der Höhenrichtung 8 gesehen unterhalb ein Fahrdraht 66 zur elektrischen Energieversorgung eines auf der jeweiligen Schiene 6 fahrenden Schienenfahrzeuges gehalten ist. Je ein Fahrdrahtseitenhalter 75 sorgt für die an sich bekannte notwendige Querlagenvarianz des Fahrdrahtes 66 zur lokalen Abriebminimierung des Panthographen des Schienenfahrzeuges.

Im nachstehend beschriebenen Verfahren zum Tausch des Querkettenwerkes 68 gegen den Querbalken 72 kann die Vorrichtung 2 aus den Fig. 1 bis 6 zum Einsatz kommen. Allerdings kann die Vorrichtung auch anders ausgebildet sein. Einige zwingende Merkmale der Vorrichtung 2 müssen jedoch vorhanden sein, um das Verfahren durchführen zu können. Diese Merkmale aus der Vorrichtung 2 werden entsprechenden Bezugszeichen aus den Figs. 1 bis 6 in die Figs. 7 bis 17 übernommen.

Zunächst wird das Schienenfahrzeug 14, welches das Längskettenwerk 4 zum Austausch des Querkettenwerkes 68 halten soll, in der Längsrichtung 10 an der Stelle des Querkettenwerkes 68 platziert. Dieser Zustand des Verfahrens ist in Fig. 7 abgebildet. Grundsätzlich ist eine exakte Positionierung des Schienenfahrzeuges in der Längsrichtung 10 nicht zwingend notwendig. Allerdings sollte zum Erhalt der Statik das Schienenfahrzeug 14 möglichst genau in der Längsrichtung 10 an der Stelle positioniert werden, an der sich das auszutauschende Querkettenwerk befindet.

Anschließend werden in und entgegen der Querrichtung 12 die Ausleger 24 ausgefahren, an deren dem Schienenfahrzeug 14 gegenüberliegenden Enden die Abstützungen 38 gehalten sind. An den Abstützungen 38 sind Schienenelemente 36' gehalten, die funktionell die gleiche Aufgabe haben, wie die zweiten Auslegerarmelemente 36 - nämlich die Stützarme 48 in der Querrichtung 12 geführt zu halten.

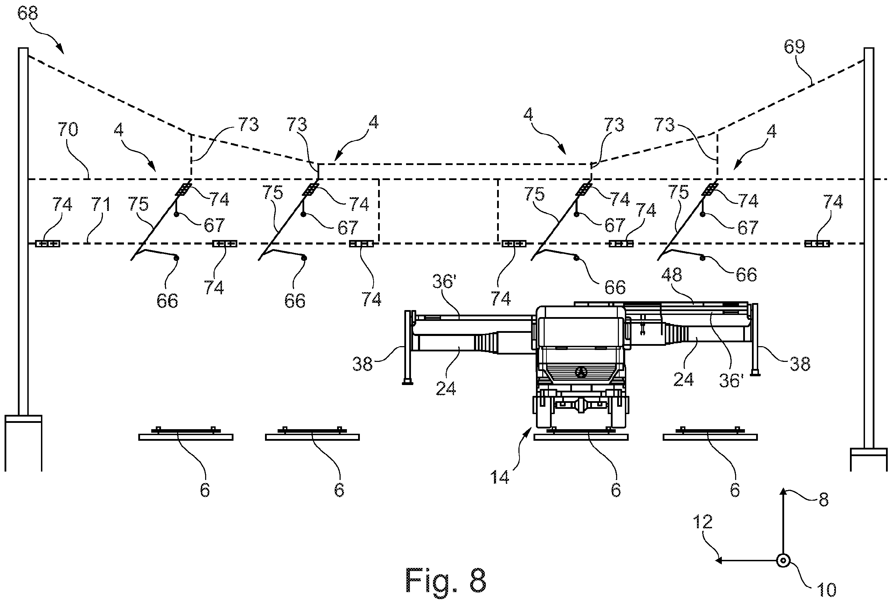

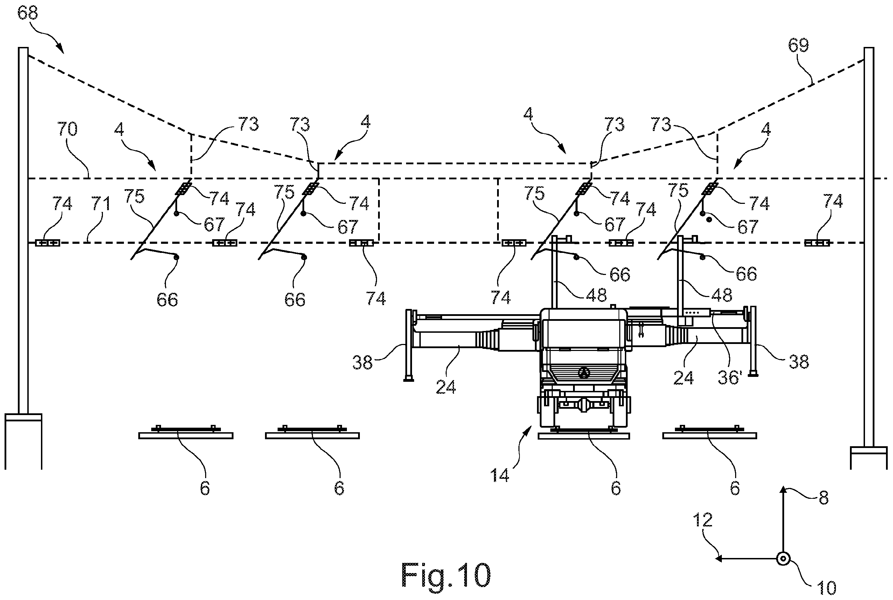

Zunächst werden in der Querrichtung 12 diejenigen Stützarme 48 positioniert, die die Längskettenwerke 4 halten sollen, welche in der Querrichtung 12 gesehen näher am Schienenfahrzeug 14 liegen. Dies ist in den Figs. 8 bis 10 verdeutlicht. Hierzu werden die Stützarme 48 auf den Schienenelementen 36' solange in der Querrichtung 12 verschoben, bis der in den Figs. 8 bis 10 nicht weiter referenzierte Sockel in der Querrichtung 12 gesehen neben dem jeweils zu tragenden Längskettenwerk 4 liegt. Danach werden die Stützarme 48 parallel zur Höhenrichtung 8 aufgestellt, so dass sich der Zustand gemäß Fig. 10 ergibt. In diesem Zustand befinden sich die gabelförmigen Enden der Stützarme 48 aus Sicht ihrer Sockel in der Querrichtung 12 gesehen vor den Längskettenwerken 4, die sie tragen sollen.

Die gabelförmigen Enden können an jeder beliebigen Stelle des Längskettenwerkes 4 angesetzt werden, also am Fahrdraht 66, am Tragseil 67 oder an beiden Stellen, wie mit der Vorrichtung 2 der Fig. 1 bis 6 vorgesehen. In dem in Figs. 7 bis 17 abgebildeten Verfahren werden die Längskettenwerke 4 ausschließlich am Tragseil 67 getragen, weshalb die gabelförmigen Enden der Stützarme 48 in der Höhenrichtung 8 gesehen zwischen dem jeweiligen Fahrdraht 66 und dem Tragseil 67 positioniert werden.

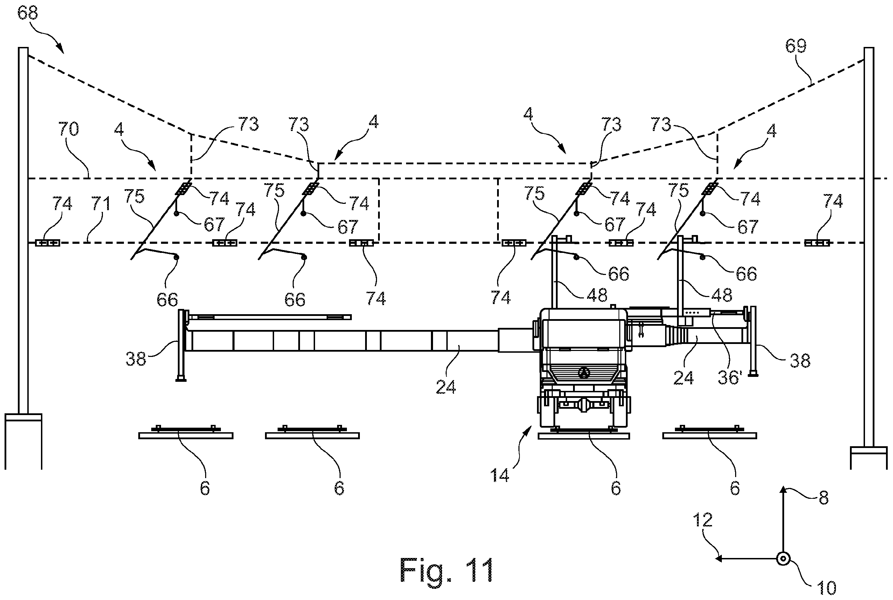

Im nächsten Schritt wird der Ausleger 24 ausgefahren, dessen Stützarme 48 die Längskettenwerke 4 halten sollen, welche in der Querrichtung 24 gesehen weiter beabstandet sind, als die zuvor erläuterten. Dieser Vorgang ist in den Fig. 11 bis 13 gezeigt. Auf dem nun ausgefahrenen Ausleger 24 werden das Schienenelement 36' und die Stützarme 48 in der gleichen Weise positioniert, wie bereits in den Fig. 8 bis 10 beschrieben. Auf eine nochmalige Erläuterung wird daher verzichtet.

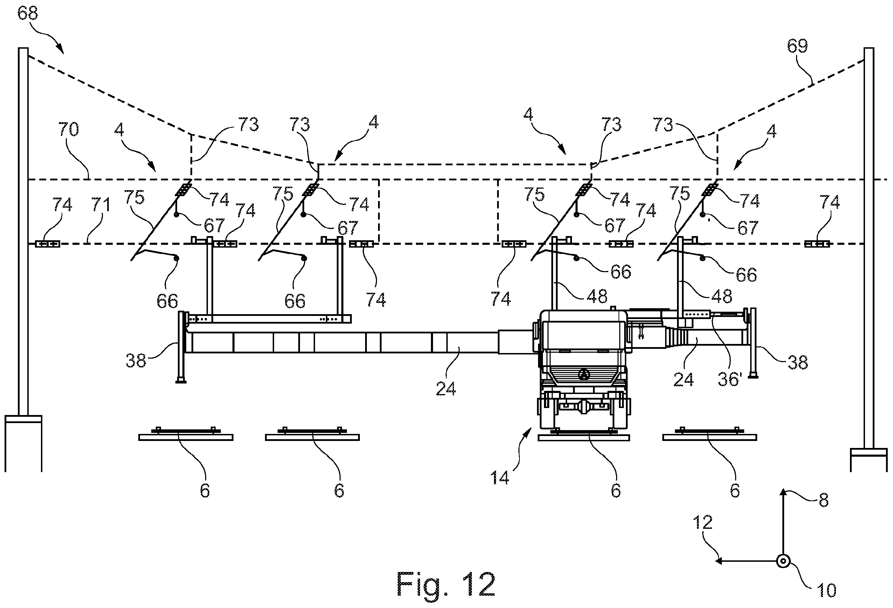

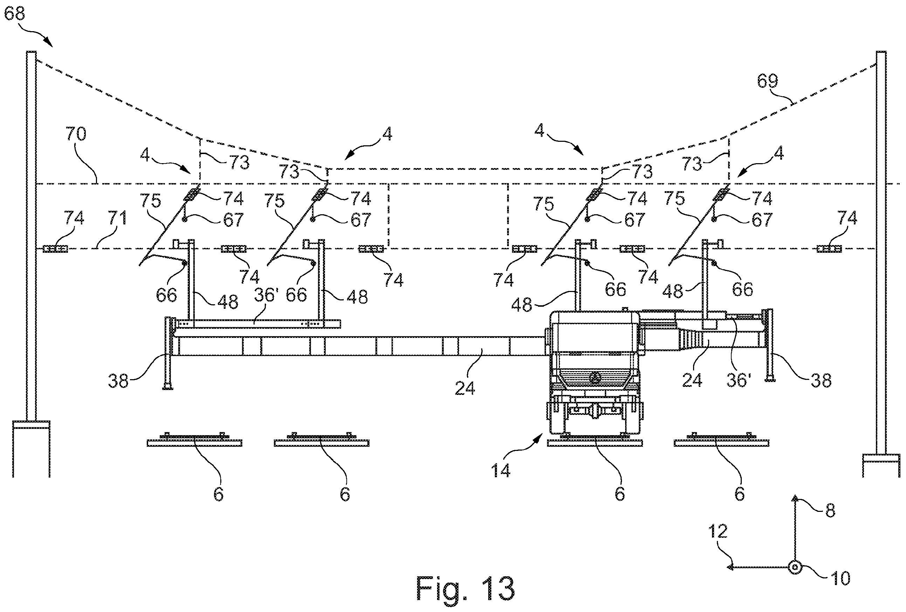

Anschließend erfolgt eine Feineinstellung der Lage der gabelförmigen Enden der Stützarme 48 in und entgegen der Querrichtung 12. Dies kann durch weiteres Ausfahren des Auslegers 24 und/oder durch Verschieben der Stützarme 48 auf den Auslegern 24 erfolgen. Beide Varianten lassen sich unmittelbar aus einem Vergleich der Figs. 12 und 13 miteinander erkennen.

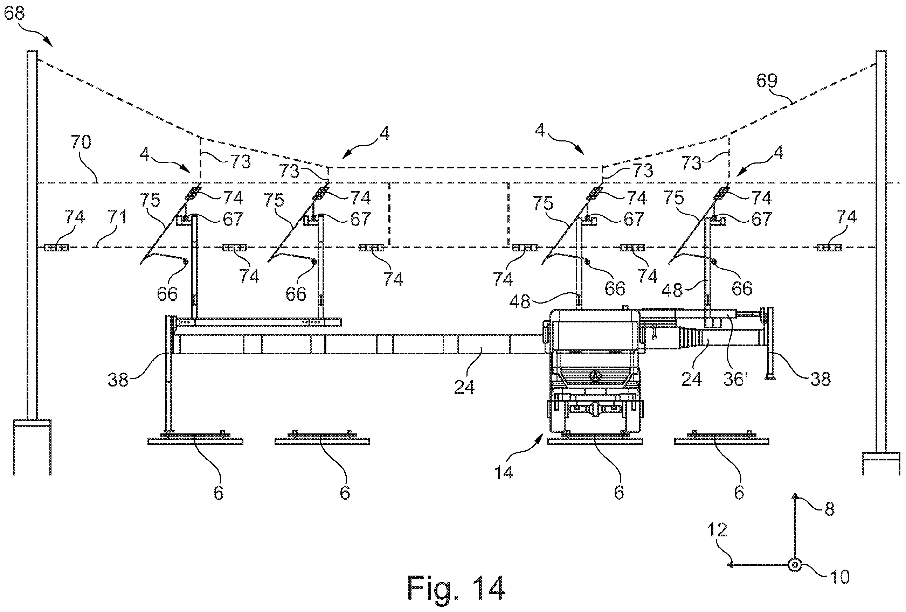

Nachdem die gabelförmigen Enden der Stützarme 48 in der Querrichtung 12 exakt an der Stelle der zu tragenden Längskettenwerke 4 positioniert sind, erfolgt der eigentliche Anhebevorgang der zu tragenden Längskettenwerke 4, der in Fig. 14 dargestellt ist.

Zunächst wird die Abstützung 38 entgegen der Höhenrichtung 8 ausgefahren und auf dem Boden abgestellt, die zum in der Querrichtung 12 weiter ausgefahrenen Ausleger 24 gehört. So sichert so das Schienenfahrzeug 14 gegen ein umkippen und stabilisiert das gesamte Gebilde während des Tragevorgangs. Ein Ausfahren der Abstützung des Auslegers 24 auf der in der Querrichtung 12 gesehenen anderen Seite ist grundsätzlich nicht erforderlich.

Nun können die gabelförmigen Enden der Stützarme 48 mit einem geeigneten Hebemechanismus in der Höhenrichtung 8 angehoben werden. Ein möglicher Hebemechanismus ist in den Fig. 6 erläutert. Allerdings können die gabelförmigen Enden der Stützarme 48 beliebig elektrisch, hydraulisch, händisch, pneumatisch oder dergleichen angehoben werden. Der Mechanismus aus Fig. 6 soll das beschriebene Verfahren nicht einschränken. Er hat lediglich den Vorteil, dass er unabhängig von jeglicher externer Energieversorgung ist, weil er sich vollständig manuell bedienen lässt.

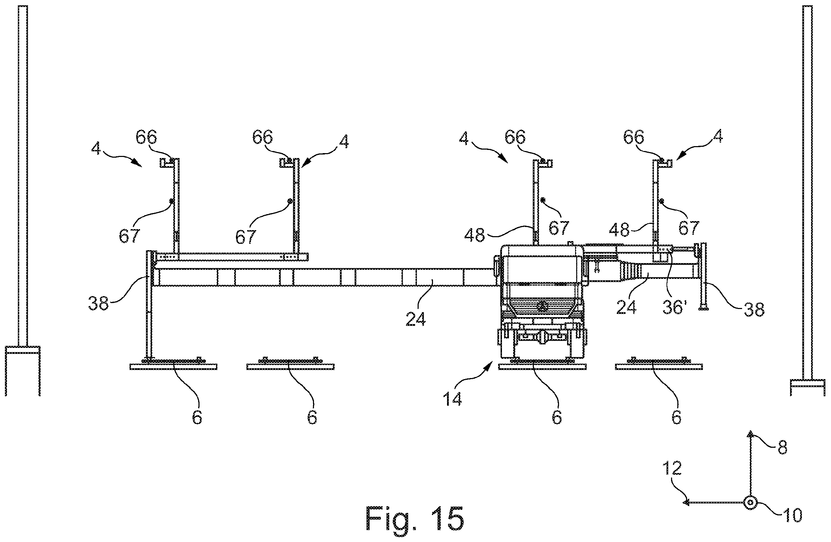

Nachdem die Längskettenwerke 4 hier an den Tragseilen 4 gehalten sind, kann nun das gesamte Querkettenwerk 68 abgebaut werden. Dieser Zustand ist in Fig. 15 verdeutlicht.

Anschließend lässt sich der Querbalken 72 wie in Fig. 16 gezeigt montieren und die Längskettenwerke an geeignete T-Trägern 76 wieder aufhängen. Dieser abschließende Zustand ist in Fig. 17 abgebildet.

## Patentansprüche

1. Vorrichtung (2) zum Halten eines sich in einer Fahrtrichtung (10) erstreckenden Längskettenwerkes (4) mit einem Tragseil (67) und einem daran gehaltenen Fahrdraht (66) in einer Höhenrichtung (8), umfassend:
- ein auf einem Schienenfahrzeug (14) platzierbares Gestell (16), **gekennzeichnet durch**
- einen am Gestell (16) gehaltenen und in einer Querrichtung (12) quer zur Fahrtrichtung (10) und quer zur Höhenrichtung (8) ausrichtbaren Ausleger (24), und
- einen in der Querrichtung (12) am Ausleger (24) gehaltenen Stützarm (48) mit einem am Ausleger (24) gehaltenen ersten Stützarmelement (49) und einem gegenüber dem ersten Stützarmelement (50) in der Höhenrichtung (8) beweglich gehaltenen zweiten Stützarmelement (50), wobei am zweiten Stützarmelement (50) ein Auflageelement (58) gehalten ist, auf welches das Längskettenwerk (4) entgegen der Höhenrichtung (8) auflegbar ist.

2. Vorrichtung (2) nach Anspruch 1, wobei das Auflageelement (58) einen sich parallel zum Ausleger (24) erstreckenden Auflagekörper (59) besitzt, von dem sich in die Höhenrichtung (8) beabstandet zueinander Querrichtungsbegrenzungselemente (60) erstrecken.

3. Vorrichtung (2) nach Anspruch 2, wobei die Querrichtungsbegrenzungselemente (60) in der Höhenrichtung (8) unterschiedlich lang ausgeführt sind.

4. Vorrichtung (2) nach einem der vorstehenden Ansprüche, wobei das erste und/oder das zweite Stützarmelement (49, 50) aus Hohlprofilstäben (41) gefertigt sind.

5. Vorrichtung (2) nach einem der vorstehenden Ansprüche, wobei das erste Stützarmelement (49) einen Hohlprofilstab (41) umfasst, in den das zweite Stützarmelement (50) eingeschoben ist.

6. Vorrichtung (2) nach einem der vorstehenden Ansprüche, umfassend einen parallel zum ersten und zweiten Stützarmelement (49, 50) am Ausleger (24) gehaltenen Zugarm (55) zum Ziehen des zweiten Stützarmelementes (50) in der Höhenrichtung (8).

7. Vorrichtung (2) nach Anspruch 6, wobei der Zugarm (55) mit den Stützarmelementen (49, 50) gemeinsam auf einem Sockel (51) gehalten sind.

8. Vorrichtung (2) nach Anspruch 6 oder 7, wobei der Zugarm (55) als Teleskopstange ausgeführt ist.

9. Vorrichtung (2) nach einem der Ansprüche 6 bis 8, umfassend eine Seilwinde (54) zum Ziehen eines mit einem der Stützarmelemente (49, 50) verbundenen und über den Zugarm (55) geführten Seils.

10. Verfahren (2) zum Sichern einer Position eines sich in einer Fahrtrichtung erstreckenden Längskettenwerkes (4) mit einem Tragseil (67) und einem daran gehaltenen Fahrdraht (66) in einer Höhenrichtung (8), **gekennzeichnet durch:**
- Anordnen eines Gestells (16) auf einer in der Höhenrichtung (8) und der Querrichtung (12) gesehen unterhalb des Fahrdrahtes (66) verlaufenden Schiene (6),
- Befestigen eines Auslegers (24) quer zur Fahrtrichtung (10) und quer zur Höhenrichtung (8) am Gestell (16), und
- Anheben des Fahrdrahtes (66) mit einem auf dem Ausleger (24) quer zur Querrichtung (12) und quer zur Längsrichtung (10) gehaltenen Stützarm (48) in die zu sichernde Position.

## Claims

1. Device (2) for holding a longitudinal chain system (4) extending in a travel direction (10) with a support cable (67) and a contact wire (66) held thereon in a height direction (8), comprising:
- a frame (16) that can be placed on a rail vehicle (14),
**characterized by**
- a boom (24) that is held on the frame (16) and is adjustable transversely to the travel direction (10) in a transverse direction (12) and transversely to the height direction (8), and
- a support arm (48) held in the transverse direction (12) on the boom (24), with a first support arm element (49) held on the boom (24) and a second support arm element (50) movably held opposite the first support arm element (49) in the height direction (8), wherein a support element (58) is held on the second support arm element (50), on which the longitudinal chain system (4) can be placed against the height direction (8).

2. Device (2) according to claim 1, wherein the support element (58) has a support body (59) extending parallel to the boom (24), from which transverse direction boundary elements (60) extend spaced apart in the height direction (8).

3. Device (2) according to claim 2, wherein the transverse direction boundary elements (60) are of different lengths in the height direction (8).

4. Device (2) according to one of the preceding claims, wherein the first and/or second support arm element (49, 50) is made of hollow profile rods (41).

5. Device (2) according to one of the preceding claims, wherein the first support arm element (49) comprises a hollow profile rod (41), into which the second support arm element (50) is inserted.

6. Device (2) according to one of the preceding claims, comprising a pulling arm (55) held on the boom (24) parallel to the first and second support arm elements (49, 50) for pulling the second support arm element (50) in the height direction (8).

7. Device (2) according to claim 6, wherein the pulling arm (55) is held together with the support arm elements (49, 50) on a base (51).

8. Device (2) according to claim 6 or 7, wherein the pulling arm (55) is designed as a telescopic rod.

9. Device (2) according to one of claims 6 to 8, comprising a cable winch (54) for pulling a cable guided over the pulling arm (55) and connected to one of the support arm elements (49, 50).

10. Method (2) for securing a position of a longitudinal chain system (4) extending in a travel direction with a support cable (67) and a contact wire (66) held thereon in a height direction (8),
**characterized by:**
- Arranging a frame (16) on a rail (6) running below the contact wire (66) as seen in the height direction (8) and the transverse direction (12),
- Attaching a boom (24) transversely to the travel direction (10) and transversely to the height direction (8) to the frame (16), and
- Raising the contact wire (66) with a support arm (48) held transversely to the transverse direction (12) and longitudinal direction (10) on the boom (24) to the position to be secured.

## Revendications

1. Dispositif (2) pour maintenir un système de chaîne longitudinale (4) s'étendant dans une direction de déplacement (10) avec un câble porteur (67) et un fil de contact (66) maintenu dessus dans une direction de hauteur (8), comprenant :
- un châssis (16) pouvant être placé sur un véhicule ferroviaire (14),
**caractérisé par**
- une flèche (24) maintenue sur le châssis (16) et ajustable transversalement à la direction de déplacement (10) dans une direction transversale (12) et transversalement à la direction de hauteur (8), et
- un bras de support (48) maintenu dans la direction transversale (12) sur la flèche (24), avec un premier élément de bras de support (49) maintenu sur la flèche (24) et un deuxième élément de bras de support (50) maintenu de manière mobile par rapport au premier élément de bras de support (49) dans la direction de hauteur (8), un élément d'appui (58) étant maintenu sur le deuxième élément de bras de support (50), sur lequel le système de chaîne longitudinale (4) peut être posé contre la direction de hauteur (8).

2. Dispositif (2) selon la revendication 1, dans lequel l'élément d'appui (58) comprend un corps d'appui (59) s'étendant parallèlement à la flèche (24), à partir duquel s'étendent des éléments de limitation de direction transversale (60) espacés dans la direction de hauteur (8).

3. Dispositif (2) selon la revendication 2, dans lequel les éléments de limitation de direction transversale (60) sont de longueurs différentes dans la direction de hauteur (8).

4. Dispositif (2) selon l'une des revendications précédentes, dans lequel le premier et/ou le deuxième élément de bras de support (49, 50) est fabriqué à partir de tiges de profil creux (41).

5. Dispositif (2) selon l'une des revendications précédentes, dans lequel le premier élément de bras de support (49) comprend une tige de profil creux (41), dans laquelle le deuxième élément de bras de support (50) est inséré.

6. Dispositif (2) selon l'une des revendications précédentes, comprenant un bras de traction (55) maintenu sur la flèche (24) parallèlement aux premier et deuxième éléments de bras de support (49, 50) pour tirer le deuxième élément de bras de support (50) dans la direction de hauteur (8).

7. Dispositif (2) selon la revendication 6, dans lequel le bras de traction (55) est maintenu conjointement avec les éléments de bras de support (49, 50) sur une base (51).

8. Dispositif (2) selon la revendication 6 ou 7, dans lequel le bras de traction (55) est conçu comme une tige télescopique.

9. Dispositif (2) selon l'une des revendications 6 à 8, comprenant un treuil à câble (54) pour tirer un câble guidé sur le bras de traction (55) et relié à l'un des éléments de bras de support (49, 50).

10. Procédé (2) pour sécuriser une position d'un système de chaîne longitudinale (4) s'étendant dans une direction de déplacement avec un câble porteur (67) et un fil de contact (66) maintenu dessus dans une direction de hauteur (8),
**caractérisé par:**
- Disposition d'un châssis (16) sur un rail (6) s'étendant sous le fil de contact (66) vu dans la direction de hauteur (8) et la direction transversale (12),
- Fixation d'une flèche (24) transversalement à la direction de déplacement (10) et transversalement à la direction de hauteur (8) sur le châssis (16), et
- Élévation du fil de contact (66) avec un bras de support (48) maintenu transversalement à la direction transversale (12) et à la direction longitudinale (10) sur la flèche (24) jusqu'à la position à sécuriser.
